# EUROPÄISCHE PATENTANMELDUNG

(11) **EP 3 957 435 A1**
(43) Veröffentlichungstag der Anmeldung: **23.02.2022**
(21) Anmeldenummer: 21192058.2
(22) Anmeldetag: 19.08.2021
(51) Int. Cl.: B23Q 11/08, F16P 3/02

(54) **GLIEDERSCHÜRZE ZUM ABDECKEN VON ÖFFNUNGEN UND ABDECKVORRICHTUNG FÜR ÖFFNUNGEN**

(30) Priorität: 20.08.2020 DE 102020210570
(71) Anmelder: Hennig Holding GmbH, 85551 Kirchheim (DE)
(72) Erfinder: Schönerwald, Kurt, 84186 Vilsheim (DE)
(74) Vertreter: Rau, Schneck & Hübner Patentanwälte Rechtsanwälte PartGmbB

(57) **Zusammenfassung**

Gliederschürze (1) zum Abdecken von Öffnungen, insbesondere für Maschinenöffnungen, umfassend eine Mehrzahl von über Gelenke (2) miteinander verbundenen Gliedern (3), mindestens ein an einem Glied (3) angeordnetes Führungselement (12) zum Führen der bewegten Gliederschürze (1) sowie mindestens ein Kopplungselement (11) zum Koppeln einer Verlagerungseinheit (29) mit der Gliederschürze (1).

## Beschreibung

Die vorliegende Patentanmeldung nimmt die Priorität der deutschen Patentanmeldung DE 10 2020 210 570.7 in Anspruch, deren Inhalt durch Bezugnahme hierin aufgenommen wird.

Die Erfindung betrifft eine Gliederschürze zum Abdecken von Öffnungen sowie eine Abdeckvorrichtung für Öffnungen, insbesondere für Maschinenöffnungen.

Die EP 2 913 577 A1 offenbart eine Abdeckvorrichtung umfassend ein Abdeckelement, welches aus einzelnen Gliedern zusammensetzt ist. Das Abdeckelement weist stift- beziehungsweise bolzenartigen Gegenprofilelemente auf, welche stirnseitig an beiden Seiten der jeweiligen Glieder befestigt sind und seitlich überstehen. Die stift- beziehungsweise bolzenartigen Gegenprofilelemente dienen dabei gleichzeitig zum Verlagern sowie zum Führen der Abdeckvorrichtung. Hierdurch sind die stift- beziehungsweise bolzenartigen Gegenprofilelemente starken Belastungen ausgesetzt.

Es ist eine Aufgabe der vorliegenden Erfindung, eine Gliederschürze bereitzustellen, welche einen einfachen und zuverlässigen Aufbau aufweist und welche gleichzeitig funktionssicher und verschleißarm verlagerbar ist.

Diese Aufgabe wird gelöst durch eine Gliederschürze mit den Merkmalen des Anspruchs 1. Erfindungsgemäß wurde erkannt, dass bei einer Gliederschürze, welche mindestens ein Kopplungselement sowie mindestens ein Führungselement aufweist, die Nachteile aus dem Stand der Technik behoben werden, wonach starke Belastungen lediglich an einem einzigen Element auftreten. Bei der Gliederschürze werden die auftretenden Belastungen und die hierbei resultierenden Kräfte, insbesondere auftretende Führungskräfte sowie Kopplungskräfte, vorteilhafterweise aufgeteilt.

Die erfindungsgemäße Gliederschürze ist derart verlagerbar, dass die auftretende Kopplungskraft lediglich an dem mindestens einen Kopplungselement und die auftretende Führungskraft lediglich an dem mindestens einen Führungselement angreift. Anders ausgedrückt tritt beim Verlagern der Gliederschürze die Kopplungskraft lediglich an dem mindestens einen Kopplungselement auf, während die Führungskraft lediglich an dem mindestens einen Führungselement auftritt. Dies ermöglicht, dass die Gliederschürze einen einfachen Aufbau hat und gleichzeitig besonders funktionssicher und verschleißarm ist. Ein weiterer Vorteil der Gliederschürze ist, dass das Kopplungselement und das Führungselement austauschbar sind, insbesondere separat austauschbar sind.

Das mindestens eine Kopplungselement umfasst insbesondere einen Vorsprung zum Koppeln bzw. Zusammenwirken mit der Verlagerungseinheit. Das mindestens eine Kopplungselement kann einteilig mit einem Glied und/oder separat ausgebildet und mit dem Glied verbunden sein.

An mehreren Gliedern ist insbesondere jeweils mindestens ein Führungselement und/oder jeweils mindestens ein Kopplungselement angeordnet. An einem Glied, vorzugsweise an jedem Glied, sind insbesondere höchstens zwei Kopplungselemente angeordnet. An einem Glied, vorzugsweise an jedem Glied, ist insbesondere genau ein Kopplungselement angeordnet, das sich entlang des Gliedes von einem ersten Ende zu einem zweiten Ende erstreckt. An einem Glied, vorzugsweise an jedem Glied, sind insbesondere genau zwei Kopplungselemente angeordnet. Ein erstes Kopplungselement ist an einem ersten Ende des Gliedes und ein zweites Kopplungselement an einem zweiten Ende des Gliedes angeordnet. Die genau zwei Kopplungselemente sind vorzugsweise entlang der Länge des Gliedes beabstandet und/oder zueinander ausgerichtet. Die Enden sind quer zu einer Verlagerungsrichtung der Gliederschürze voneinander beabstandet. Das jeweilige Kopplungselement umfasst insbesondere einen Vorsprung, vorzugsweise genau einen Vorsprung, der über eine Rückseite des Gliedes bzw. der Gliederschürze übersteht. Hierdurch weist die Gliederschürze einen einfachen und zuverlässigen Aufbau auf.

Vorteilhafterweise weist das mindestens eine Kopplungselement ein Arretierelement sowie einen Vorsprung auf. Der Vorsprung dient dabei zum Koppeln einer Verlagerungseinheit mit der Gliederschürze, während das Arretierelement dazu dient, das Kopplungselement an dem jeweiligen Glied lösbar zu befestigen beziehungsweise zu arretieren. Der Vorsprung und das Arretierelement sind dabei über ein Verbindungselement miteinander verbunden. Insbesondere weist das Arretierelement eine Breite B_{AE} und das Verbindungselement eine Breite B_{VE} auf, wobei gilt B_{AE} > B_{VE}, insbesondere gilt B_{AE} ≥ 2 * B_{VE}, vorteilhafterweise gilt B_{AE} ≥ 3 * B_{VE}.

Jedes der Glieder weist insbesondere ein Hohlprofil auf. Das Hohlprofil erstreckt sich dabei aus Gewichtsgründen vorteilhafterweise über die gesamte Länge der einzelnen Glieder. Vorteilhafterweise ist das Kopplungselement zumindest teilweise in dem Hohlprofil angeordnet. Vorteilhafterweise ist das Führungselement zumindest teilweise in dem Hohlprofil angeordnet.

Vorzugsweise bildet das Hohlprofil des jeweiligen Gliedes mindestens einen Hohlraum aus, in dem das mindestens eine Führungselement und/oder das mindestens eine Kopplungselement reibschlüssig und/oder formschlüssig befestigt ist. Vorzugsweise sind in dem mindestens einen Hohlraum zwei Führungselemente befestigt, wobei ein erstes Führungselement an einem ersten Ende des Gliedes und ein zweites Führungselement an einem zweiten Ende des Gliedes angeordnet ist. In dem Hohlprofil sind vorzugsweise zwei Führungselemente teilweise angeordnet. Ein erstes Führungselement ist an einem ersten Ende des Gliedes teilweise in dem Hohlprofil angeordnet, wohingegen ein zweites Führungselement an einem zweiten Ende des Gliedes teilweise in dem Hohlprofil angeordnet ist.

Vorteilhafterweise weist das mindestens eine Führungselement einen Führungsabschnitt sowie einen Befestigungsabschnitt auf. Der Befestigungsabschnitt dient dabei zum reversiblen Anordnen des Führungselements an einem der Glieder. Der Führungsabschnitt dient zum Koppeln des Führungselements mit einem Gegenführelement. Vorzugsweise ist der Befestigungsabschnitt in einem Hohlprofil bzw. Hohlraum des Gliedes reibschlüssig und/oder formschlüssig befestigt.

Das jeweilige Führungselement ist insbesondere als Führungsgleitelement ausgebildet.

Vorteilhafterweise weisen die Glieder, an welchen ein Kopplungselement angeordnet ist, eine Kupplungsnut auf. Die Anzahl der Kupplungsnuten an einem Glied entspricht dabei der Anzahl der Kopplungselemente, welche an dem Glied angeordnet sind. Die Kupplungsnut dient zur Aufnahme des Verbindungselements. Insbesondere weist die Kupplungsnut eine Breite B_{KN} auf, wobei gilt B_{KN} ≥ B_{VE}, vorteilhafterweise gilt B_{KN} > B_{VE}. Anders ausgedrückt ist die Breite B_{KN} der Kupplungsnut insbesondere größer oder gleich der Breite B_{VE} des Verbindungselements, vorteilhafterweise entspricht die Breite B_{KN} der Kupplungsnut der Breite B_{VE} des Verbindungselements. Letzteres ermöglicht eine besonders einfache und gleichzeitig stabile Anordnung des Kopplungselements an einem Glied und darüber hinaus eine besonders effektive Kraftübertragung der an dem Vorsprung auftretenden Kopplungskraft an das jeweilige Glied.

Vorteilhafterweise weist ein Glied mindestens ein Kopplungselement und/oder mindestens ein Führungselement auf. Vorzugsweise sind an einem Glied höchstens zwei Kopplungselemente, insbesondere genau ein Kopplungselement oder genau zwei Kopplungselemente, und/oder höchstens zwei Führungselemente, insbesondere genau zwei Führungselemente angeordnet. Vorteilhafterweise ist die Gliederschürze derart ausgebildet, dass einzelne aneinandergrenzende Glieder abwechselnd mindestens ein Kopplungselement oder mindestens ein Führungselement aufweisen. Diese Ausgestaltung ist besonders vorteilhaft, da die an den Kopplungselementen auftretenden Kopplungskräfte lediglich dem jeweiligen Glied mit den daran angeordneten Kopplungselementen angreifen und auftreten, während die an den Führungselementen auftretenden Führungskräfte lediglich an dem jeweiligen Glied mit den daran angeordneten Führungselementen angreifen und auftreten. Dies bewirkt eine besonders vorteilhafte Aufteilung der einzelnen Belastungen und Kräfte, wodurch die erfindungsgemäße Gliederschürze einen einfachen Aufbau hat und gleichzeitig besonders funktionssicher und verschleißarm ist.

Vorzugsweise weisen mehrere Glieder zugehörige Kopplungselemente und/oder Führungselemente auf. Insbesondere weist jedes Glied mindestens ein Kopplungselement und/oder mindestens ein Führungselement auf. Vorzugsweise weist jedes Glied mindestens ein Kopplungselement, vorzugsweise mindestens zwei Kopplungselemente, und zwei Führungselemente auf. Vorzugsweise sind an einem Glied höchstens zwei Kopplungselemente, insbesondere genau ein Kopplungselement oder genau zwei Kopplungselemente, und/oder höchstens zwei Führungselemente, insbesondere genau zwei Führungselemente angeordnet. Das jeweilige Führungselement ist insbesondere als Führungsgleitelement ausgebildet.

Vorteilhafterweise weisen benachbarte Glieder an Verbindungsflächen ein Gelenk auf. Die Verbindungsflächen sind dabei die einander zugewandten Seitenflächen der Glieder. Die Gelenke sind vorteilhafterweise einteilig mit den Gliedern ausgebildet. Alternativ können in einer weiteren Ausgestaltung die Gelenke und die Glieder mehrteilig ausgebildet sein, wobei die Gelenke die einzelnen Glieder mittels einer Keder-Nut-Verbindung gelenkig miteinander verbinden.

Das mindestens eine Kopplungselement und/oder das mindestens eine Führungselement ist aus Metall oder aus einem Hartkunststoff, insbesondere Polypropylen, Polyethylen, Polycarbonat, Polyethylenterephthalat, Polytetrafluorethylen oder Polyethylennaphthalat.

Die Gliederschürze dient zum Abdecken von Öffnungen. Die abzudeckende Öffnung ist insbesondere eine Maschinenöffnung. Derartige Maschinenöffnungen sind insbesondere an Produktions- und/oder Werkzeugmaschinen ausgebildet.

Eine Gliederschürze nach Anspruch 2 gewährleistet eine hohe Funktionssicherheit, da die Anzahl der Kopplungselemente sowie der Führungselemente pro Glied gleich ist. Vorteilhafterweise kann ein Glied mehrere Kopplungselemente und mehrere Führungselemente, insbesondere zwei Kopplungselemente und zwei Führungselemente, aufweisen. Durch die Mehrzahl an Kopplungselementen und Führungselementen an einem Glied wird ein Verkanten der bewegten Gliederschürze vermieden, da eine Mehrzahl an Kraftangriffspunkten für die Kopplungs- beziehungsweise Führungskräfte vorliegen. Die Kopplungselemente sind vorzugsweise quer zu einer Verlagerungsrichtung beabstandet zueinander angeordnet. Die Führungselemente sind insbesondere an einander gegenüberliegenden Enden des zugehörigen Gliedes angeordnet. Vorzugsweise sind an einem Glied höchstens zwei Kopplungselemente, insbesondere genau ein Kopplungselement oder genau zwei Kopplungselemente angeordnet. Die genau zwei Kopplungselemente sind an einander gegenüberliegenden Enden des zugehörigen Gliedes angeordnet. Das genau eine Kopplungselement erstreckt sind von einem ersten Ende des Gliedes zu einem zweiten Ende des Gliedes. Vorzugsweise sind an dem Glied höchstens zwei Führungselemente, insbesondere genau zwei Führungselemente angeordnet. Die genau zwei Führungselemente sind insbesondere an einander gegenüberliegenden Enden des zugehörigen Gliedes angeordnet.

Eine Gliederschürze nach Anspruch 3 ermöglicht einen einfachen und zuverlässigen Aufbau. Vorteilhafterweise bilden das Kopplungselement sowie das Führungselement eine Einheit aus. Insbesondere ist das Arretierelement des Kopplungselements mit dem Befestigungsabschnitt des Führungselements einteilig ausgebildet. Das Führungselement ist insbesondere als Führungsgleitelement ausgebildet.

Eine Gliederschürze nach Anspruch 4 ermöglicht eine hohe Funktionssicherheit. Darüber hinaus ist eine derartige Gliederschürze besonders verschleißarm verlagerbar. Der Abdeckflächenabschnitt wird durch die miteinander verbundenen Glieder ausgebildet. Hierbei ist der Abdeckflächenabschnitt an einer Rückseite der Gliederschürze angeordnet. Unter der Rückseite der Gliederschürze wird dabei die Seite der Gliederschürze verstanden, welche der Verlagerungseinheit zugewandt ist.

Vorteilhafterweise verläuft die Kupplungsnut ausgehend von der ersten beziehungsweise zweiten Seitenfläche der Gliederschürze entlang des Hohlprofils in Richtung der entgegengesetzten Seitenfläche der Gliederschürze an der Rückseite der Gliederschürze und somit am Abdeckflächenabschnitt. Vorteilhafterweise bildet die Kopplungsnut hierbei einen Anschlag aus, welcher zum Arretieren Verbindungselements dient. Durch den Anschlag wird eine maximale Einführlänge des Kopplungselements in das Hohlprofil definiert. Vorteilhafterweise ist der Befestigungsabschnitt des Führungselements derart ausgebildet, dass dieser das Verbindungselement des Kopplungselements an den Anschlag drückt und somit das Kopplungselement innerhalb des Hohlprofils befestigt beziehungsweise arretiert.

In einer besonders vorteilhaften Ausgestaltung sind die Glieder derart über die Gelenke miteinander verbunden, dass der Abdeckflächenabschnitt ein geschlossenes Profil ausbildet. Hierdurch wird eine Verschmutzung der Gelenke der Gliederschürze vermieden, wodurch diese besonders funktionssicher ist.

Eine Gliederschürze nach Anspruch 5 ermöglicht eine besonders hohe Funktionssicherheit. Darüber hinaus ist eine derartige Gliederschürze besonders verschleißarm verlagerbar. Insbesondere bilden die miteinander verbundenen Glieder den mindestens einen Führungsflächenabschnitt aus. Der mindestens eine Führungsflächenabschnitt ist vorteilhafterweise an der ersten und/oder an der zweiten Seitenfläche der Gliederschürze angeordnet. Der mindestens eine Führungsflächenabschnitt ist dabei der Abschnitt der Gliederschürze, an welchem die Gliederschürze führbar gelagert wird. Vorteilhafterweise weisen die miteinander verbundenen Glieder an jedem Führungsflächenabschnitt ein Schutzelement auf. Das Schutzelement ist einteilig mit dem jeweiligen Glied ausgebildet. Das Schutzelement dient zum Abdecken des Führungselements. Vorteilhafterweise bildet eine Vorderseite der Gliederschürze durch das Schutzelement eine geschlossene Fläche aus. Das Schutzelement wird insbesondere durch ein teilweises Abfräsen des jeweiligen Gliedes hergestellt.

Eine Gliederschürze nach Anspruch 6 ermöglicht eine besonders hohe Funktionssicherheit. Darüber hinaus ist eine derartige Gliederschürze besonders verschleißarm verlagerbar. Dadurch, dass das Kopplungselement und das Führungselement beabstandet voneinander angeordnet sind, treten die Kopplungskräfte sowie die Führungskräfte ebenfalls beabstandet voneinander auf. Dies bedeutet, dass das Kopplungselement sowie das Führungselement an unterschiedlichen Bereichen der jeweiligen Glieder angeordnet sind. Durch die beabstandete Anordnung wird erreicht, dass die jeweiligen Kräfte lediglich an zuvor bestimmten Bereichen an den jeweiligen Gliedern auftreten. Das Kopplungselement ist insbesondere derart an einem der Glieder angeordnet, dass das Kopplungselement an der Rückseite der Gliederschürze und somit an dem Abdeckflächenabschnitt angeordnet ist. Das mindestens eine Führungselement ist insbesondere derart an einem der Glieder angeordnet, dass das Führungselement an einer der Seitenflächen der Gliederschürze und somit an dem Führungsflächenabschnitt angeordnet ist.

Eine Gliederschürze nach Anspruch 7 ermöglicht eine besonders hohe Funktionssicherheit. Darüber hinaus ist eine derartige Gliederschürze besonders verschleißarm verlagerbar. Dadurch, dass die Gelenke beabstandet von dem Kopplungselement und/oder von dem Führungselement angeordnet sind, treten die an dem Kopplungselement auftretenden Kopplungskräfte sowie die an dem Führungselement auftretenden Führungskräfte sowie die an den Gelenken auftretenden Verbindungskräfte ebenfalls beabstandet voneinander auf. Dies bedeutet, dass das Kopplungselement, das Führungselement und die Gelenke an unterschiedlichen Bereichen der jeweiligen Glieder angeordnet sind. Durch die beabstandete Anordnung wird erreicht, dass die jeweiligen Kopplungs-, Führungs- und Verbindungskräfte lediglich an zuvor bestimmten Bereichen an den jeweiligen Gliedern auftreten.

Eine Gliederschürze nach Anspruch 8 ist ermöglicht eine funktionssichere und verschleißarme Kopplung der Gliederschürze mit der Verlagerungseinheit. Vorteilhafterweise ist das Kopplungselement genau mittig zwischen den Gelenken angeordnet. Hierdurch wird eine maximale Beabstandung des Kopplungselements von dem Gelenken und somit ebenfalls eine maximale Beabstandung der jeweils auftretenden Kopplungskraft und der Verbindungskraft erreicht. An einem Glied, insbesondere an jedem Glied, ist vorzugsweise genau ein Kopplungselement oder genau zwei Kopplungselemente angeordnet, wobei das jeweilige Kopplungselement mittig zwischen Gelenken angeordnet ist.

Eine Gliederschürze nach Anspruch 9 ermöglicht einen besonders einfachen und zuverlässigen Aufbau. Vorteilhafterweise bildet das Hohlprofil an jeder Seitenfläche der Gliederschürze an jedem der Glieder eine Aufnahmeöffnung, insbesondere mit einer Breite B_{AO} und einer Höhe H_{AO}, aus. Ein Glied, insbesondere jedes Glied, weist insbesondere zwei Aufnahmeöffnung an endseitigen Seitenflächen des Gliedes auf. Die jeweilige Aufnahmeöffnung mündet in mindestens einen Hohlraum. Durch die jeweilige Aufnahmeöffnung ist insbesondere ein Kopplungselement und/oder ein Führungselement in den mindestens einen Hohlraum eingeführt. Das Kopplungselement und/oder das Führungselement ist formschlüssig und/oder kraftschlüssig in dem Hohlraum befestigt.

Insbesondere dienen die Aufnahmeöffnung sowie das Hohlprofil zur Aufnahme des Arretierelements. Insbesondere weist das Arretierelement eine Höhe H_{AE} auf, wobei gilt H_{AE} ≤ H_{AO}, vorteilhafterweise gilt H_{AE} < H_{AO}. Anders ausgedrückt ist die Höhe H_{AE} des Arretierelements kleiner als die Höhe H_{AO} der Aufnahmeöffnung. Vorteilhafterweise ist die die Höhe H_{AE} des Arretierelements gleich der Höhe H_{AO} der Aufnahmeöffnung.

Bezüglich der Breite B_{AO} der Aufnahmeöffnung, der Breite B_{AE} des Arretierelements und der Breite B_{VE} des Verbindungselements gilt B_{AO} ≥ B_{AE} > B_{VE}, insbesondere gilt B_{AO} ≥ B_{AE} ≥ 2 * B_{VE}, vorteilhafterweise gilt B_{AO} ≥ B_{AE} ≥ 3 * B_{VE}. Anders ausgedrückt ist die Breite B_{AO} der Aufnahmeöffnung größer oder gleich der Breite B_{AE} des Arretierelements, während die Breite B_{VE} des Verbindungselements gleichzeitig kleiner ist als die Breite B_{AE} des Arretierelements. Insbesondere ist die Breite B_{AO} der Aufnahmeöffnung größer oder gleich der Breite B_{AE} des Arretierelements, während die Breite B_{AE} des Arretierelements gleichzeitig mindestens doppelt so groß ist wie die Breite B_{VE} des Verbindungselements. Vorteilhafterweise ist die Breite B_{AO} der Aufnahmeöffnung größer oder gleich der Breite B_{AE} des Arretierelements, während die Breite B_{AE} des Arretierelements gleichzeitig mindestens dreimal so groß ist wie die Breite B_{VE} des Verbindungselements. Dies ermöglicht eine einfache und gleichzeitig stabile Anordnung des Arretierelements innerhalb des Hohlprofils, eine einfache und gleichzeitig stabile Anordnung des Kopplungselements an dem Abdeckflächenabschnitt und darüber hinaus eine besonders effektive Kraftübertragung der an dem Vorsprung auftretenden Kopplungskraft an das jeweilige Glied.

Insbesondere dient die Aufnahmeöffnung sowie das Hohlprofil zur Aufnahme des Befestigungsabschnitts. Der Befestigungsabschnitt weist hierbei eine Breite B_{BA} auf, wobei vorteilhafterweise gilt B_{AE} = B_{BA} ≤ B_{AO}. Anders ausgedrückt ist die Breite B_{BA} des Befestigungsabschnitts vorteilhafterweise kleiner oder gleich der Breite B_{AO} der Aufnahmeöffnung und gleichzeitig gleich der Breite B_{AE} des Arretierelements. Dies ermöglicht eine besonders einfache und gleichzeitig stabile Anordnung des Befestigungselements innerhalb des Hohlprofils, eine einfache und gleichzeitig stabile Anordnung des Führungselements an dem Führungsflächenabschnitt und darüber hinaus eine besonders effektive Kraftübertragung der an dem Führungselement auftretenden Führungskraft an das jeweilige Glied.

Gemäß einer besonders vorteilhaften Ausgestaltung gilt B_{AE} ≤ B_{BA} ≤ B_{AO}. Anders ausgedrückt ist die Breite B_{BE} des Befestigungsabschnitts vorteilhafterweise kleiner oder gleich der Breite B_{AO} der Aufnahmeöffnung und gleichzeitig größer oder gleich der Breite B_{AE} des Arretierelements. Diese Ausgestaltung ist insbesondere dann denkbar, wenn das Kopplungselement sowie das Führungselement einteilig ausgebildet sind und eine Einheit ausbilden. Im Falle, dass die Breite B_{AE} des Arretierelements kleiner ist als die Breite B_{BE} des Befestigungsabschnitts, verjüngt sich die Breite der Einheit ausgehend von dem Führungselement in Richtung des Kopplungselements und läuft konisch zu, wodurch ein einfaches Einführen der Einheit in die Aufnahmeöffnung und in das Hohlprofil ermöglicht wird.

Vorteilhafterweise weist das Arretierelement des Kopplungselements und / oder der Befestigungsabschnitt des Führungselements an der Seite, welche zuerst in die Aufnahmeöffnung beziehungsweise in das Hohlprofil einführbar ist, mindestens eine Fase auf. Die Fase dient dabei zum einfachen Einbringen beziehungsweise Einführen des Arretierelements und somit des Kopplungselements und / oder des Befestigungsabschnitts und somit des Führungselements in der Aufnahmeöffnung beziehungsweise in dem Hohlprofil.

Eine Gliederschürze nach Anspruch 10 ermöglicht einen besonders einfachen und zuverlässigen Aufbau. Vorteilhafterweise weisen das Kopplungselement und das Führungselement jeweils mindestens ein Rastelement und/oder mindestens ein Passelement auf. Das Rastelement dient zum formschlüssigen Befestigen des Kopplungselements und/oder des Führungselements in dem Hohlprofil, wodurch beide Elemente an den jeweiligen Gliedern befestigbar bzw. arretierbar sind. Das Passelement dient zum kraftschlüssigen Befestigen des Kopplungselements und/oder des Führungselements. Im Fall, dass das Kopplungselement sowie das Führungselement einteilig ausgebildet sind und eine Einheit ausbilden, weist die Einheit insbesondere mindestens ein Rastelement und/oder mindestens ein Passelement auf.

In einer besonders vorteilhaften Ausgestaltung ist das mindestens eine Kopplungselement und/oder das mindestens eine Führungselement über Schrauben mit dem jeweiligen Glied verbunden. Insbesondere weist das Glied Gewindebohrungen auf, über welche das mindestens eine Kopplungselement und/oder das mindestens eine Führungselement befestigbar ist.

Eine Gliederschürze nach Anspruch 11 ermöglicht einen besonders einfachen und zuverlässigen Aufbau. Insbesondere erstreckt sich das Kopplungselement über die gesamte Breite des Gliedes, an welchem das Kopplungselement einteilig ausgebildet ist. Bei einer derartigen einteiligen Ausbildung ist das Kopplungselement direkt über das Verbindungselement an dem jeweiligen Glied angeordnet.

Eine Gliederschürze nach Anspruch 12 ermöglicht einen besonders einfachen und zuverlässigen Aufbau. Das Rundprofil ermöglicht insbesondere ein einfaches und unkompliziertes Koppeln der Gliederschürze mit der Verlagerungseinheit. Ein hohles Rundprofil verringert insbesondere das Gewicht der Gliederschürze, wodurch zudem eine funktionssichere und verschleißarme Verlagerbarkeit der Gliederschürze ermöglicht wird. Vorteilhafterweise weist das Kopplungselement lediglich abschnittsweise an dem Vorsprung das Rundprofil auf. Vorteilhafterweise ist lediglich der Teil des Vorsprungs als Rundprofil ausgebildet, der dem Gegenkopplungselement zugewandt ist. Vorteilhafterweise weist der Teil des Vorsprungs, welcher dem Glied zugewandt ist, dagegen eine rechteckige Formgebung auf. Dies ermöglicht ein einfaches und stabiles Befestigen beziehungsweise Arretieren des Kopplungselements beziehungsweise des Vorsprungs an dem jeweiligen Glied.

Eine weitere Aufgabe der vorliegenden Erfindung ist, eine Abdeckvorrichtung bereitzustellen, welche einen einfachen und zuverlässigen Aufbau aufweist und welche gleichzeitig in einfacher Weise ein funktionssicheres und verschleißarmes Verlagern einer Gliederschürze ermöglicht.

Diese Aufgabe wird gelöst durch eine Abdeckungsvorrichtung mit den Merkmalen des Anspruchs 13. Insbesondere kann die erfindungsgemäße Abdeckvorrichtung auch mit den Merkmalen der Ansprüche 1 bis 12 weitergebildet werden. Die Vorteile der erfindungsgemäßen Abdeckvorrichtung entsprechen den bereits beschriebenen Vorteilen der Gliederschürze. Die bereits beschriebenen Vorteile führen dazu, dass die erfindungsgemäße Abdeckvorrichtung zum Verlagern einer Gliederschürze einen einfachen und zuverlässigen Aufbau aufweist und gleichzeitig in einfacher Weise ein funktionssicheres und verschleißarmes Verlagern einer Gliederschürze ermöglicht.

Vorteilhafterweise weist die Führungseinheit mindestens ein Gegenführungsprofil auf, welches insbesondere im Querschnitt U-förmig oder als Führungsband ausgebildet ist. Vorzugsweise weist die Führungseinheit mehrere Gegenführungsprofile auf, die an den jeweiligen Seitenflächen der Gliederschürze angeordnet sind und in denen die bewegte Gliederschürze über die Führungselemente führbar ist.

Vorteilhafterweise weist die Verlagerungseinheit eine Welle sowie ein Gegenkopplungselement auf, wobei die Welle und das Gegenkopplungselement drehfest miteinander verbunden sind. Die Welle ist um eine Drehachse A drehbar gelagert. Das Gegenkopplungselement steht dabei mit dem Kopplungselement in Wirkverbindung. Anders ausgedrückt steht das Gegenkopplungselement mit dem Vorsprung in Eingriff. In einer besonders vorteilhaften Ausgestaltung weist das Gegenkopplungselement ein Endlos-Gegenkopplungsprofil auf, welches an dem Kopplungselement eingreift und die Gliederschürze in eine Abdeckrichtung oder in eine Aufdeckrichtung verlagert. Vorzugsweise dient die Verlagerungseinheit gleichzeitig zum Umlenken der geführten Gliederschürze um einen Winkel α₁, wobei gilt α₁ < 180°, insbesondere α₁ ≤ 90°.

Eine Abdeckvorrichtung nach Anspruch 14 ermöglicht einen einfachen und zuverlässigen Aufbau und gleichzeitig in einfacher Weise ein funktionssicheres Verlagern einer Gliederschürze. Die Antriebseinheit steht mit der Verlagerungseinheit in Wirkverbindung, vorteilhafterweise in direkter Wirkverbindung. Die Antriebseinheit überträgt somit eine Antriebskraft an die Welle der Verlagerungseinheit. Die Antriebseinheit ist insbesondere ein Elektromotor.

Die Umlenkeinheit dient zum Umlenken der Gliederschürze der geführten Gliederschürze um einen Winkel α₂, wobei insbesondere gilt 90° ≤ α₂ ≤ 180°. Hierdurch wird eine besonders kompakte Ausgestaltung der Abdeckvorrichtung erreicht.

Eine weitere Aufgabe der vorliegenden Erfindung ist, ein Verfahren zum Verlagern einer Gliederschürze bereitzustellen, welches in einfacher Weise ein funktionssicheres und verschleißarmes Verlagern einer Gliederschürze ermöglicht.

Diese Aufgabe wird gelöst durch ein Verfahren mit den Merkmalen des Anspruchs 15. Insbesondere kann das erfindungsgemäße Verfahren auch mit den Merkmalen der Ansprüche 1 bis 14 weitergebildet werden. Die Vorteile des erfindungsgemäßen Verfahrens entsprechen den bereits beschriebenen Vorteilen der Gliederschürze beziehungsweise der Abdeckvorrichtung. Die bereits beschriebenen Vorteile führen dazu, dass das erfindungsgemäße Verfahren zum Verlagern einer Gliederschürze in einfacher Weise funktionssicher und verschleißarm ist.
- Fig. 1: eine schematische Schnittdarstellung einer Abdeckvorrichtung, wobei der Schnitt eine Gliederschürze, eine Führungseinheit, eine Verlagerungseinheit, eine Umlenkeinheit sowie eine Antriebseinheit zeigt;
- Fig. 2: eine perspektivische Darstellung einer erfindungsgemäßen Gliederschürze gemäß einem ersten Ausführungsbeispiel;
- Fig. 3: eine perspektivische Darstellung eines Koppelelements sowie eines Führungselements gemäß dem in der Fig. 2 gezeigten Ausführungsbeispiel;
- Fig. 4: eine vergrößerte Darstellung des Bereichs der Gliederschürze mit daran angeordneten Koppelelementen und Führungselementen aus Figur 2;
- Fig. 5: eine perspektivische Teildarstellung einer Gliederschürze gemäß einem zweiten Ausführungsbeispiel;
- Fig. 6: eine perspektivische Darstellung eines Koppelelements der Gliederschürze gemäß Figur 5;
- Fig. 7: eine perspektivische Teildarstellung eines Gliedes einer Gliederschürze gemäß einem dritten Ausführungsbeispiel;
- Fig. 8: eine vergrößerte Schnittdarstellung entlang der Schnittlinie VIII-VIII in Fig. 7;
- Fig. 9: eine perspektivische Darstellung einer umgelenkten Gliederschürze gemäß einem vierten Ausführungsbeispiel.

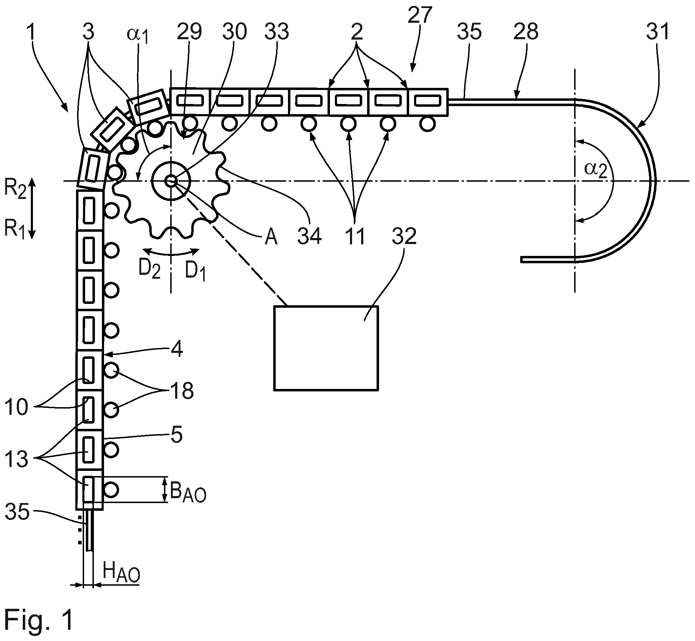

Figur 1 zeigt eine schematische Schnittdarstellung einer erfindungsgemäßen Abdeckvorrichtung 27 zum Abdecken einer Öffnung. Die abzudeckende Öffnung ist insbesondere eine Maschinenöffnung. Derartige Maschinenöffnungen sind insbesondre an Produktions- und/oder Werkzeugmaschinen ausgebildet.

Die Abdeckvorrichtung 27 umfasst eine Gliederschürze 1, welche im geschlossenen Zustand die Öffnung vollständig abdeckt. Die Gliederschürze 1 ist mittels einer Verlagerungseinheit 29 verlagerbar, wobei die Gliederschürze 1 beim Verlagern über eine Führungseinheit 28 führbar gelagert ist. Darüber hinaus umfasst die Abdeckvorrichtung 27 eine Umlenkeinheit 31 zum Umlenken der Gliederschürze 1 sowie eine Antriebseinheit 32 zum automatischen Verlagern der Gliederschürze 1. Die Antriebseinheit 32 ist ein Elektromotor.

Die Verlagerungseinheit 29 weist eine Welle 33 auf, welche um eine Drehachse A drehbar gelagert ist. An der Welle 33 ist mindestens ein Gegenkopplungselement 30 drehfest angeordnet. Das Gegenkopplungselement 30 weist hierbei Endlos-Gegenkopplungsprofile 34 auf. Eine Drehung der Welle 33 bewirkt eine Drehung des Gegenkopplungselements 30 sowie der daran angeordneten Endlos-Gegenkopplungsprofile 34.

Die Gliederschürze 1 umfasst eine Mehrzahl von über Gelenke 2 verbundenen Gliedern 3, wobei die Gelenke 2 in dem gezeigten Ausführungsbeispiel einteilig mit den Gliedern 3 ausgebildet sind. Die verbundenen Glieder 3 sind über die Gelenke 2 gelenkig miteinander verbundenen und bilden an der Gliederschürze 1 einen Abdeckflächenabschnitt 4 aus. Der Abdeckflächenabschnitt 4 ist an einer Rückseite 5 der Gliederschürze 1 angeordnet und dient zum Abdecken der Öffnung. Anders ausgedrückt ist der Abdeckflächenabschnitt 4 an der Seite der Gliederschürze 1 ausgebildet, welche der Verlagerungseinheit 29 zugewandt ist und die Öffnung abdeckt. Die Gliederschürze 1 weist an jedem Glied 3 Kopplungselemente 11 auf. Die Kopplungselemente 11 dienen zum Koppeln der Gliederschürze 1 mit der Verlagerungseinheit 29. Die Kopplungselemente 11 sind an dem Abdeckflächenabschnitt 4 an den jeweiligen Gliedern 3 angeordnet. Die Kopplungselemente 11 erstrecken sich ausgehend von dem Abdeckflächenabschnitt 4 über diesen in Richtung der abzudeckenden Öffnung hinaus und bilden einen Vorsprung 18 aus. Der Vorsprung 18 ist als Rundprofil ausgebildet.

Die Endlos-Gegenkopplungsprofile 34 greifen formschlüssig in Vorsprünge 18 der jeweiligen Kopplungselemente 11 ein, wodurch die Gegenkopplungsprofile 34 mit den Vorsprüngen 18 in Wirkverbindung stehen. Beim Drehantreiben der Welle 33 bewirken die Endlos-Gegenkopplungsprofile 34 des Gegenkopplungselements 30 eine Kopplungskraft an den Vorsprüngen 18 und somit an den Kopplungselementen 11.

In dem dargestellten Ausführungsbeispiel dient die Verlagerungseinheit 29 gleichzeitig zum erstmaligen Umlenken der Gliederschürze 1 um einen ersten Umlenkwinkel α₁, wobei gilt α₁ = 90°.

Die Umlenkeinheit 31 dient zum erneuten Umlenken der Gliederschürze 1 nach der Verlagerungseinheit 29 um einen zweiten Umlenkwinkel α₂, wobei gilt α₂ = 180°. Die Führungseinheit 28 dient zum Führen der Gliederschürze 1 und umfasst mindestens ein Gegenführungsprofil 35 in Form eines Führungsbandes.

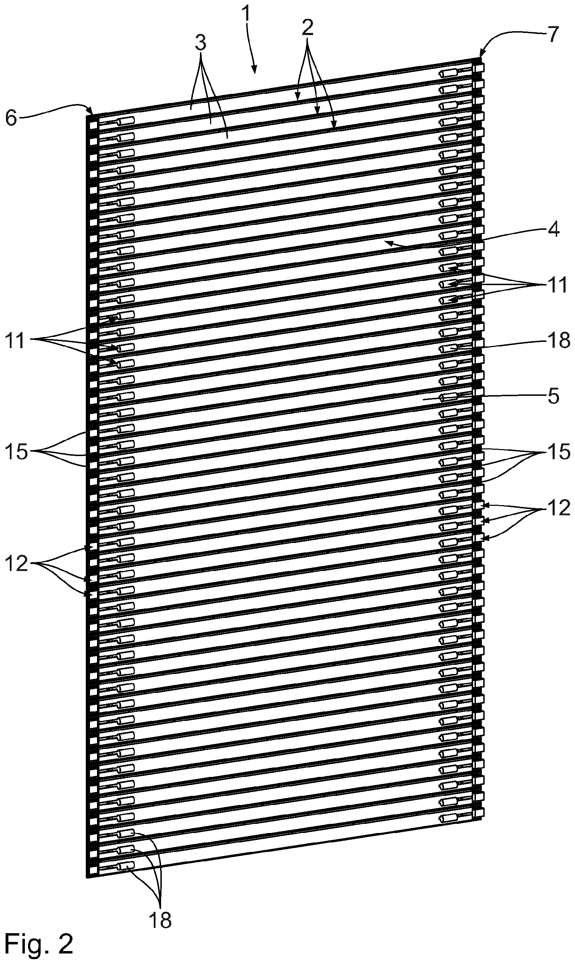

Die in Figur 2 gezeigten und miteinander verbundenen Glieder 3 bilden neben dem Abdeckflächenabschnitt 4 an der Gliederschürze 1 ebenfalls zwei Führungsflächenabschnitte 6 und 7 aus. Der erste Führungsflächenabschnitt 6 ist an einer ersten Seitenfläche 8 der Gliederschürze 1 angeordnet, während der zweite Führungsflächenabschnitt 7 an einer zweiten Seitenfläche 9 der Gliederschürze 1 angeordnet ist. Die Führungsflächenabschnitte 6 und 7 sind die Bereiche der Gliederschürze 1, welche beim Verlagern der Gliederschürze 1 mit der Führungseinheit 28 in Wirkverbindung stehen.

Die Gliederschürze 1 weist an jedem Glied 3 ein Führungselement 12 auf. Die Führungselemente 12 dienen zum Führen der Gliederschürze 1 beim Verlagern der Gliederschürze 1 durch die Verlagerungseinheit 29. Hierbei stehen die Führungselemente 12 in Wirkverbindung mit dem Gegenführungsprofil 35 der Führungseinheit 28. Hierdurch ist die Gliederschürze 1 über die an den Führungsflächenabschnitten 6 und 7 angeordneten Führungselemente 12 führbar.

Die Führungselemente 12 sind an den beiden Führungsflächenabschnitten 6 und 7 der Gliederschürze 1 angeordnet, wobei jedes Glied 3 an jedem der an den beiden Führungsflächenabschnitte 5 und 6 ein Schutzelement 15 aufweist. Die Schutzelemente 15 sind einteilig mit dem jeweiligen Glied 3 ausgebildet und durch ein teilweises Abfräsen des Gliedes 1 hergestellt. Durch die Schutzelemente 15 sind die Führungselemente 12 an einer Vorderseite der Gliederschürze 1 abdeckt. Somit bildet die Vorderseite eine planare Oberfläche ohne Erhebungen oder Vorsprünge aus.

Die Kopplungselemente 11 und die Führungselemente 12 sind beabstandet voneinander an den jeweiligen Gliedern 3 der Gliederschürze 1 angeordnet. Anders ausgedrückt sind die Kopplungselemente 11 und die Führungselemente 12 an unterschiedlichen Bereichen und somit bereichsweise getrennt voneinander an jedem einzelnen Glied 3 an der Gliederschürze 1 angeordnet. Darüber hinaus sind die Kopplungselemente 11 und die Führungselemente 12 beabstandet von den Gelenken 2 angeordnet. Anders ausgedrückt sind die Kopplungselemente 11, die Führungselemente 12 sowie die Gelenke 2 jeweils an unterschiedlichen Bereichen und somit bereichsweise getrennt voneinander an jedem einzelnen Glied 3 an der Gliederschürze 1 angeordnet.

Beim Verlagern der Gliederschürze 1 treten die an den Kopplungselementen 11 auftretenden Kopplungskräfte und die an den Führungselementen 12 auftretenden Führungskräfte getrennt voneinander auf. Darüber hinaus treten die an den Gelenken 2 auftretenden Verbindungskräfte getrennt von den an den Kopplungselementen 11 auftretenden Kopplungskräften und von den an den Führungselementen 12 auftretenden Führungskräften auf.

Die einzelnen Glieder 3 weisen jeweils ein Hohlprofil 13 auf. Das Hohlprofil 13 erstreckt sich über die gesamte Länge eines jeden Gliedes 3 und bildet an allen Gliedern 3 an jeder der Seitenflächen 8 und 9 beziehungsweise an jedem der Führungsflächenabschnitte 6 und 7 jeweils eine Aufnahmeöffnung 10 aus. Somit weist jedes Glied 3 der Gliederschürze 1 jeweils zwei Aufnahmeöffnungen 10 auf.

Jedes Hohlprofil 13 sowie die dazugehörigen Aufnahmeöffnungen 10 dienen zur Aufnahme eines Kopplungselements 11 und eines Führungselements 12, genauer zur Aufnahme eines Arretierelements 20 des Kopplungselements 11 und zur Aufnahme eines Befestigungsabschnitts 37 des Führungselements 12. Das Arretierelement 20 dient dabei zum Befestigen des Kopplungselements 11 an dem Hohlprofil 13, während der Befestigungsabschnitt 37 zum Befestigen des Führungselements 11 an dem Hohlprofil 13 dient. In dem dargestellten Ausführungsbeispiel weist jedes Glied 3 jeweils zwei Kopplungselemente 11 sowie zwei Führungselemente 12 auf, welche in die beiden Aufnahmeöffnungen 10 sowie in dem Hohlprofil 13 eingebracht sind und in diesen formschlüssig und/oder kraftschlüssig reversibel befestigt sind.

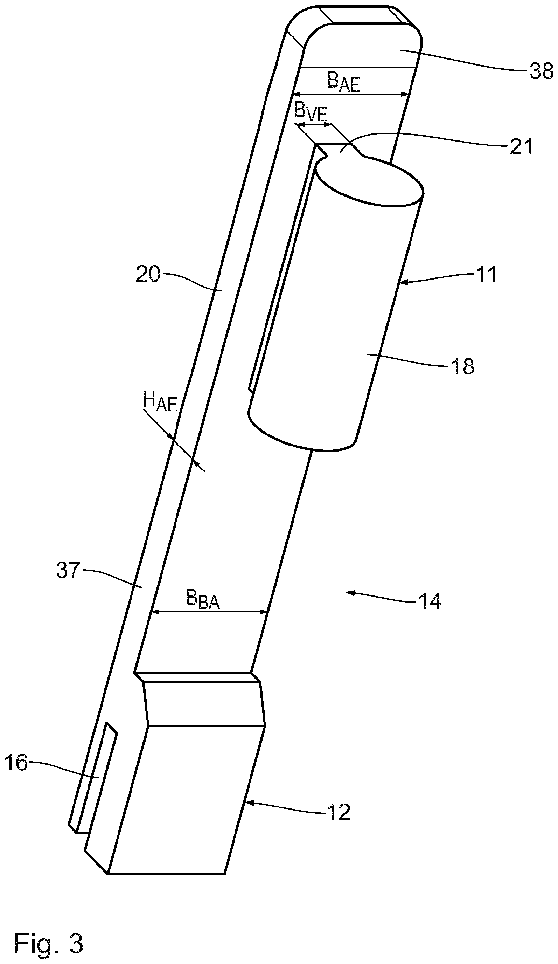

Figur 3 zeigt eine perspektivische Darstellung eines Kopplungselements 11 sowie eines Führungselements 12 der Gliederschürze 1 aus Figur 2. Das Kopplungselement 11 und das Führungselement 12 sind einteilig ausgebildet. Das Führungselement 12 weist einen Führungsabschnitt 16 auf. Der Führungsabschnitt 16 bildet eine Führungsnut aus. Die Führungsnut dient zur Aufnahme des als Führungsband ausgebildeten Gegenführungsprofils 35, um die Gliederschürze 1 beim Verlagern zu führen.

Das Kopplungselement 11, das Führungselement 12 und das Arretierelement 20 bilden eine Einheit 14 aus. Das Kopplungselement 11 ist über ein Verbindungselement 21 an dem Arretierelement 20 angeordnet. Das Arretierelement 20 weist eine Breite B_{AE} auf, welche der Breite B_{AO} der Aufnahmeöffnung 10 entspricht. Das Arretierelement 20 weist eine Höhe H_{AE} auf, welche der Höhe H_{AO} der Aufnahmeöffnung 10 entspricht. Darüber hinaus weist das Arretierelement 20 an der Seite, welche zuerst in die Aufnahmeöffnung 10 beziehungsweise in das Hohlprofil 13 einführbar ist, eine Fase 38 auf. Die Fase 38 dient dabei zum einfachen Einbringen beziehungsweise Einführen des Arretierelements 20 und somit der Einheit 14 in der Aufnahmeöffnung 10 beziehungsweise in dem Hohlprofil 13.

Die Einheit 14 ist somit zumindest teilweise in eine der Aufnahmeöffnungen 10 einbringbar. In dem dargestellten Ausführungsbeispiel weist jedes Glied 3 jeweils zwei Einheiten 14 auf, welche jeweils in eine der beiden Aufnahmeöffnungen 10 sowie in dem dazugehörigen Hohlprofil 13 eingebracht sind. Die Einheiten 14 sind hierbei formschlüssig und/oder kraftschlüssig reversibel in diesen befestigt.

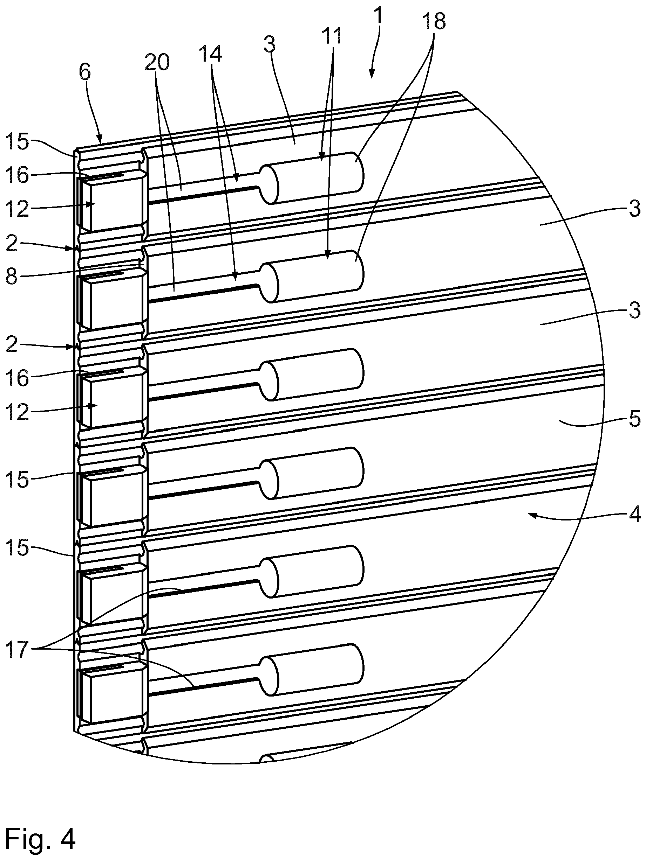

Darüber hinaus weist jedes Glied 3 jeweils zwei Kopplungsnuten 17 auf. Die zwei Kopplungsnuten 17 sind insbesondere aus Figur 4 ersichtlich. Die Kopplungsnuten 17 erstrecken sich ausgehend von den Aufnahmeöffnungen 10 über eine vordefinierte Länge L_{KN} in Längsrichtung des jeweiligen Gliedes 3 an dem Abdeckflächenabschnitt 4 beziehungsweise an der Rückseite 5. Jede Kopplungsnut 17 bildet an einem Ende, welches der Aufnahmeöffnung gegenüberliegt, einen Anschlag 19 aus. Der Anschlag 19 dient als Einführanschlag für die eingebrachte Kopplungseinheit 14. Genauer dient der Anschlag 19 als Einführanschlag für das Verbindungselement 21. Der Anschlag 19 definiert somit die maximale Einführweite der Einheit 14 innerhalb des Hohlprofils 13. Das Verbindungselement 21 weist eine Breite B_{VE} auf, welche einer Breite B_{KN} der Kopplungsnut 17 entspricht. Die Breite B_{VE} des Verbindungselements 21 ist wesentlich kleiner als die Breite B_{AE} des Arretierelements 20.

Aus Figur 4 ist ersichtlich, dass das Arretierelement 20 innerhalb des Hohlprofils 13 angeordnet ist und eine wesentlich größere Breite B_{AE} aufweist als die Breite B_{KN} der Kopplungsnut 17 beziehungsweise der Breite B_{VE} des Verbindungselements 21. Aufgrund dessen ist die Einheit 14 lediglich in Richtung der jeweiligen Aufnahmeöffnung 10 entlang der Kopplungsnut 17 verlagerbar oder aus dem Hohlprofil 13 und der jeweiligen Aufnahmeöffnung 10 entnehmbar. Anders ausgedrückt ist die Einheit 14 nicht in Richtung der Rückseite 6 beziehungsweise des Abdeckflächenabschnitts 4 verlagerbar oder aus dem Hohlprofil 13 und der jeweiligen Aufnahmeöffnung 10 entnehmbar. Durch die unterschiedlichen Breiten des Arretierelements 20 und der Kopplungsnut 17 beziehungsweise des Verbindungselements 21, wobei gilt B_{AE} > B_{VE} und B_{KN} ≥ B_{VE}, wird beim Einleiten einer Kopplungskraft an dem Kopplungselement 11 zum Verlagern der Gliederschürze 1 diese Kraft an das jeweilige Glied 3 und somit an die Gliederschürze 1 übertragen.

Die Funktionsweise der Abdeckvorrichtung 27 beziehungsweise das Verfahren zum Verlagern der Gliederschürze 1 ist wie folgt: Die Öffnung ist zunächst offen und soll abgedeckt werden. Hierdurch wird die Antriebseinheit 32 derart angetrieben, dass die Welle 33 in einer ersten Drehrichtung D₁ durch die Antriebseinheit 32 drehangetrieben wird. Über das drehfest an der Welle 33 angeordnete Gegenkopplungselement 30 wird die Drehbewegung auf die Endlos-Gegenkopplungsprofile 34 übertragen. Dadurch, dass die Vorsprünge 18 mit den Endlos-Gegenkopplungsprofilen 34 in Eingriff stehen, wird die Drehbewegung auf die Vorsprünge 18 der Koppelelemente 11 übertragen und somit die Gliederschürze 1 in einer Abdeckrichtung R₁ bewegt und derart entlang der Führungseinheit 28 verlagert, so dass die Öffnung abgedeckt wird. Die Drehbewegung der Welle 33 wird dabei in eine Linearbewegung der Gliederschürze 1 umgewandelt. Um die Öffnung aufzudecken wird die Antriebseinheit 32 derart angetrieben, dass die Welle 33 in einer zweiten Drehrichtung D₂ durch die Antriebseinheit 32 drehangetrieben wird. Wie bereits ausführlich beschrieben findet eine Wandlung der Drehbewegung der Welle 33 statt, wodurch die Gliederschürze 1 linear in Richtung einer Aufdeckrichtung R₂ bewegt wird und entlang der Führungseinheit 28 verlagert wird.

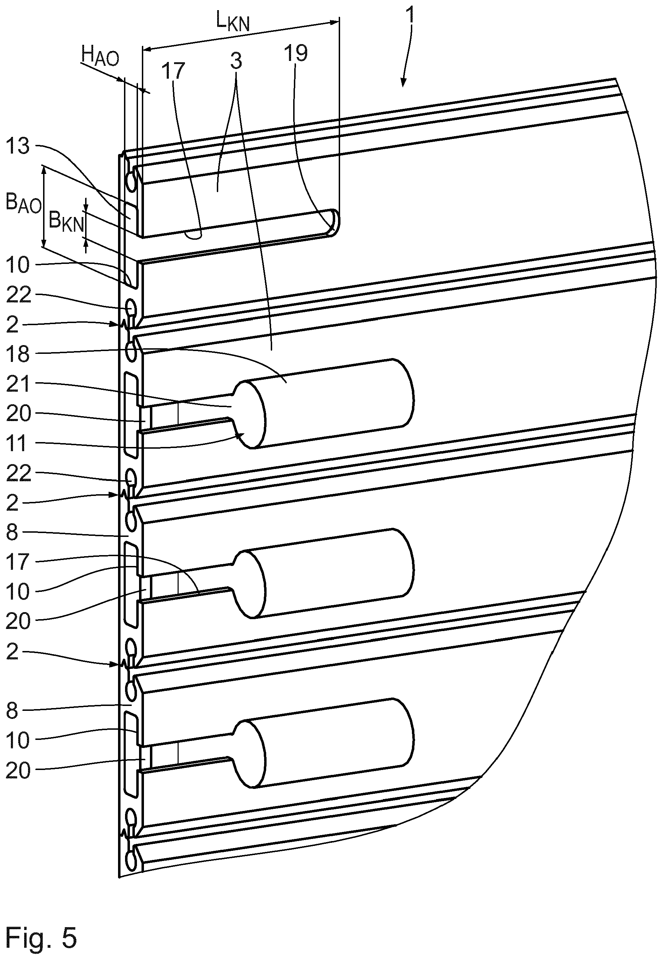

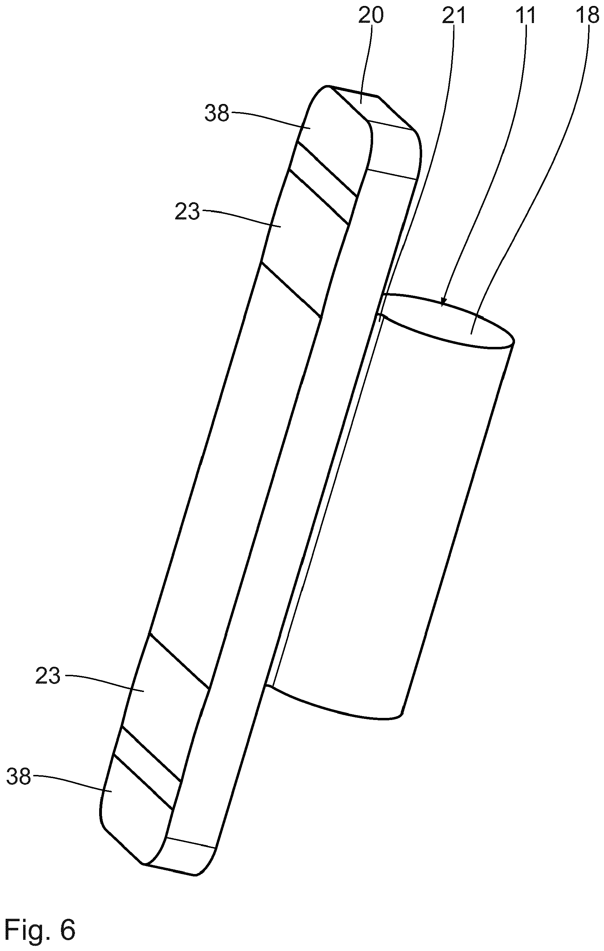

Anhand der Figuren 5 und 6 wird ein zweites Ausführungsbeispiel der Gliederschürze 1 beschrieben. Konstruktiv gleiche Komponenten haben die gleiche Bezugsziffer wie in den vorherigen Figuren 1 bis 4. In dem zweiten Ausführungsbeispiel sind die Gelenke als Keder-Nut-Verbindungen 22 dargestellt. Darüber hinaus sind das Kopplungselement 11 sowie das Führungselement 12 getrennt voneinander ausgebildet. Dies bedeutet, dass das Kopplungselement 11 sowie das Führungselement 12 eigenständige Bauteile sind, wodurch diese einzeln an einem jeweiligen Glied 3 arretierbar sind. Aus Gründen der Übersichtlichkeit ist in Figur 5 das oberste Glied 3 ohne ein Führungselement 12 und ohne ein Kopplungselement 11 dargestellt, während die weiteren Glieder 3 lediglich mit einem Kopplungselement 11 und ohne ein Führungselement 12 dargestellt sind.

Die Kopplungselemente 11 sind ausgehend von den Aufnahmeöffnungen 10 hinter den Führungselementen 12 innerhalb des Hohlprofils 13 an den jeweiligen Gliedern 3 angeordnet. In dem dargestellten Ausführungsbeispiel sind die Führungselemente 12 derart ausgestaltet, dass die Verbindungselemente 21 der jeweiligen Kopplungselemente 11 an den Anschlägen 19 anschlagen. Anders ausgedrückt fixieren die einzelnen Führungselemente 12 die jeweiligen Kopplungselemente 11 innerhalb des Hohlprofils 13 des jeweiligen Gliedes 3.

Das Arretierelement 20 eines jeweiligen Kopplungselements 12 weist zudem Rastelemente und/oder Passelemente 23 auf, wodurch die Kopplungselemente 11 innerhalb der Hohlprofile 13 reversibel arretiert beziehungsweise geklemmt werden. In dem dargestellten Ausführungsbeispiel sind die Rastelemente und/oder Passelemente 23 als Erhöhungen ausgebildet. Durch die Erhöhungen erfolgt die Arretierung der Kopplungselemente 11 mittels Formschluss und/oder Kraftschluss. Die Rastelemente und/oder Passelemente 23 können ebenfalls an dem Befestigungsabschnitt 37 des Führungselements 12 ausgebildet sein, wodurch ebenfalls eine formschlüssige und/oder kraftschlüssige Anbringung der Führungselemente 12 innerhalb des Hohlprofils 13 beziehungsweise an der Aufnahmeöffnung 10 ermöglicht wird.

Darüber hinaus weist das Arretierelement 20 an jedem Ende jeweils eine Fase 38 auf. Die Fasen 38 dienen dabei zum einfachen Einbringen beziehungsweise Einführen des Arretierelements 20 und somit des Kopplungselements 11 in der Aufnahmeöffnung 10 beziehungsweise in dem Hohlprofil 13. Aufgrund der Ausgestaltung mit zwei Fasen 38 ist das Arretierelement 20 und somit ebenfalls das Kopplungselement 11 von beiden Seiten einfach in die der Aufnahmeöffnung 10 beziehungsweise in dem Hohlprofil 13 einführbar. Mindestens eine Fase 38 kann ebenfalls an dem Befestigungsabschnitt 37 des Führungselements 12 ausgebildet sein, wodurch ebenfalls ein einfaches Einführen des Befestigungsabschnitts 37 in das Hohlprofil 13 beziehungsweise an der Aufnahmeöffnung 10 ermöglicht wird.

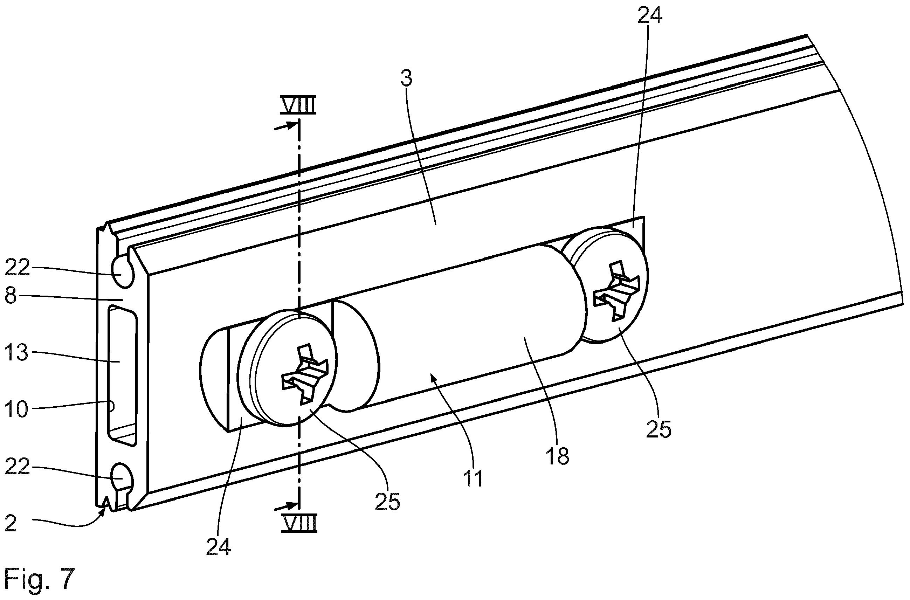

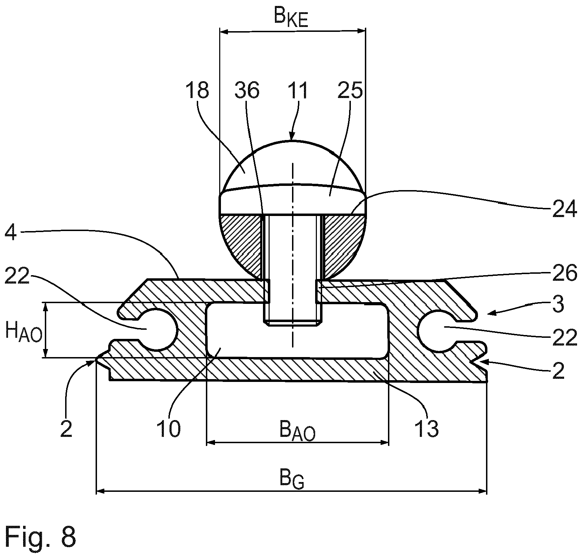

Anhand der Figuren 7 und 8 wird ein drittes Ausführungsbeispiel der Gliederschürze 1 beschrieben. Konstruktiv gleiche Komponenten haben die gleiche Bezugsziffer wie in den vorherigen Figuren 1 bis 6. In dem dritten Ausführungsbeispiel ist das Kopplungselement 11 auf der Seite des Abdeckflächenabschnitts 4 mittels Schrauben 25 reversibel an dem Glied 3 angeordnet. Das Kopplungselement 11 ist als Rundprofil ausgebildet. Hierdurch wird eine einfache und stabile Befestigung beziehungsweise Arretierung des Kopplungselements 11 beziehungsweise des Vorsprungs 18 an dem jeweiligen Glied 3 ermöglicht. In diesem Ausführungsbeispiel weist das Kopplungselement 11 kein Verbindungselement 21 und kein Arretierelement 20 auf. Zudem weist das Kopplungselement 11 Fixierbereiche 24 auf, wobei jeder Fixierbereich 24 eine Durchgangsbohrung 36 umfasst, durch welche die Schrauben 25 steckbar sind. An der Seite des Abdeckflächenabschnitts 4 weist das Glied 3 Gewindebohrungen 26 auf, wodurch das Kopplungselement 11 mittels der Schrauben 25 an dem Glied 3 befestigbar ist. Die Gewindebohrungen 26 erstrecken sich von der Seite des Gliedes 3, an welchem der Abdeckflächenabschnitt 4 ausgebildet ist, bis zu dem Hohlprofil 13.

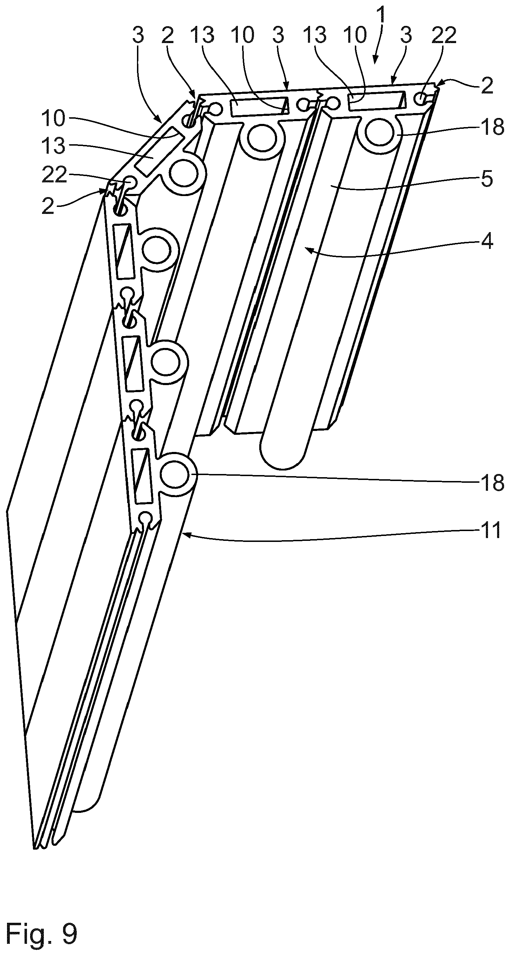

Anhand der Figur 9 wird ein viertes Ausführungsbeispiel der Gliederschürze 1 beschrieben. Konstruktiv gleiche Komponenten haben die gleiche Bezugsziffer wie in den vorherigen Figuren 1 bis 8. Die dargestellte Gliederschürze 1 ist in umgelenkter Form dargestellt, wobei aus Gründen der Übersichtlichkeit die Umlenkeinheit nicht dargestellt ist. In dem vierten Ausführungsbeispiel sind die jeweiligen Glieder 3 einteilig mit den dazugehörigen Kopplungselementen 11 ausgebildet. Die Kopplungselemente 11 sind dabei als hohle Rundprofile ausgebildet. Eine Breite B_{KE} der Kopplungselemente 11 kann einer Breite B_{G} der Glieder 3 entsprechen.

## Patentansprüche

1. Gliederschürze (1) zum Abdecken von Öffnungen, insbesondere für Maschinenöffnungen, aufweisend
- eine Mehrzahl von über Gelenke (2) miteinander verbundenen Gliedern (3) und
- mindestens ein an einem Glied (3) angeordnetes Führungselement (12) zum Führen der bewegten Gliederschürze (1),
**gekennzeichnet durch**
mindestens ein Kopplungselement (11) zum Koppeln einer Verlagerungseinheit (29) mit der Gliederschürze (1).

2. Gliederschürze (1) nach Anspruch 1, **dadurch gekennzeichnet, dass** die Glieder (3) jeweils ein Kopplungselement (11) und ein Führungselement (12), insbesondere zwei Kopplungselemente (11) und zwei Führungselemente (12), aufweisen.

3. Gliederschürze (1) nach Anspruch 1 oder 2, **dadurch gekennzeichnet, dass** das Kopplungselement (11) und das Führungselement (12) einteilig ausgebildet sind.

4. Gliederschürze (1) nach einem der Ansprüche 1 bis 3, **dadurch gekennzeichnet, dass** das Kopplungselement (11) an einem Abdeckflächenabschnitt (4) der Gliederschürze (1) angeordnet ist.

5. Gliederschürze (1) nach einem der Ansprüche 1 bis 4, **dadurch gekennzeichnet, dass** das Führungselement (12) an einem Führungsflächenabschnitt (6, 7) der Gliederschürze (1) angeordnet ist.

6. Gliederschürze (1) nach einem der Ansprüche 1 bis 5, **dadurch gekennzeichnet, dass** das Kopplungselement (11) sowie das Führungselement (12) beabstandet voneinander angeordnet sind.

7. Gliederschürze (1) nach einem der Ansprüche 1 bis 6, **dadurch gekennzeichnet, dass** die Gelenke (2) beabstandet von dem Kopplungselement (11) und/oder beabstandet von dem Führungselement (12) angeordnet sind.

8. Gliederschürze (1) nach einem der Ansprüche 1 bis 7, **dadurch gekennzeichnet, dass** das Kopplungselement (11) zwischen den Gelenken (2) an einem Glied (3) angeordnet ist.

9. Gliederschürze (1) nach einem der Ansprüche 1 bis 8, **dadurch gekennzeichnet, dass** die Glieder (3) jeweils mindestens eine Aufnahmeöffnung (10) zur Aufnahme des Kopplungselements (11) und/oder des Führungselements (12) aufweisen.

10. Gliederschürze (1) nach einem der Ansprüche 1 bis 9, **dadurch gekennzeichnet, dass** das Kopplungselement (11) und/oder das Führungselement (12) form- und/oder kraftschlüssig an den Gliedern (3) angeordnet ist.

11. Gliederschürze (1) nach einem der Ansprüche 1 bis 10, **dadurch gekennzeichnet, dass** das Kopplungselement (11) und ein Glied (3) einteilig ausgebildet sind.

12. Gliederschürze (1) nach einem der Ansprüche 1 bis 11, **dadurch gekennzeichnet, dass** das Kopplungselement (11) zumindest abschnittsweise als Rundprofil, insbesondere als hohles Rundprofil, ausgebildet ist.

13. Abdeckvorrichtung (27) für Öffnungen, insbesondere für Maschinenöffnungen, umfassend
- eine Gliederschürze (1) nach einem der Ansprüche 1 bis 12,
- eine Führungseinheit (28) zum Führen der Gliederschürze (1),
- eine Verlagerungseinheit (29) zum Verlagern der Gliederschürze (1).

14. Abdeckvorrichtung (27) gemäß Anspruch 13, **gekennzeichnet durch** eine Antriebseinheit (32) zum automatischen Verlagern der Gliederschürze (1) und / oder eine Umlenkeinheit (31) zum Umlenken der Gliederschürze (1).

15. Verfahren zum Verlagern eine Gliederschürze (1) mit den Schritten:
- Bereitstellen einer Gliederschürze (1) nach einem der Ansprüche 1 bis 12,
- Verlagern der Gliederschürze (1),
wobei beim Verlagern der Gliederschürze (1) die an dem Kopplungselement (11) auftretende Kopplungskraft und die an dem Führungselement (12) auftretende Führungskraft voneinander getrennt auftreten.
